Europäisches Patentamt

European Patent Office

Office européen des brevets

(19)

(11) Publication number: **0 325 827**
**A2**

(12) **EUROPEAN PATENT APPLICATION**

(21) Application number: **88303347.4**

(22) Date of filing: **13.04.88**

(51) Int. Cl.⁴: **B01J 27/19 , C10G 47/12**

(30) Priority: **29.01.88 US 150086**

(43) Date of publication of application:
**02.08.89 Bulletin 89/31**

(84) Designated Contracting States:
**BE DE ES FR GB IT NL**

(71) Applicant: **UNION OIL COMPANY OF CALIFORNIA**
**1201 West 5th Street**
**Los Angeles California 90017(US)**

(72) Inventor: **Ward, John W.**
**19002 Gordon Lane**
**Yorba Linda California 92686(US)**

(74) Representative: **Jack, Bruce James et al**
**FORRESTER & BOEHMERT**
**Widenmayerstrasse 4/I**
**D-8000 Munchen 22(DE)**

(54) **Ni-P-Mo catalyst containing silica-alumina and hydroprocessing therewith.**

(57) A catalyst contains nickel, molybdenum and phosphorus components and a dispersion of silica-alumina in a matrix containing alumina. The catalyst is employed to hydroprocess, and more particularly to mildly hydrocrack, a hydrocarbon oil.

EP 0 325 827 A2

## Ni-P-Mo Catalyst containing Silica-Alumina and Hydroprocessing therewith

The invention relates to a catalyst and the use of such a catalyst for hydroprocessing, more particularly for mildly hydrocracking hydrocarbon oils. More particularly, the invention relates to a catalytic process for increasing the yield of middle distillate products from vacuum gas oils and residuum hydrocarbon feedstocks.

In the refining of hydrocarbon oils, it is often desirable to subject the hydrocarbon oil to catalytic hydroprocessing. During hydroprocessing, particulate catalysts are utilized to promote reactions such as hydrocracking, hydrodesulfurization, hydrodenitrogenation, hydrodemetallization, and/or conversion of asphaltene compounds. One or more of such reactions may occur during hydroprocessing by contacting a particulate catalyst with a feedstock, such as a residual petroleum oil fraction or a vacuum gas oil, under conditions of elevated temperature and pressure and in the presence of hydrogen. For example, the sulfur components in the feedstock may be converted to hydrogen sulfide, nitrogen components to ammonia, asphaltenes to molecules having increased hydrogen to carbon (H-C) ratios, higher molecular weight hydrocarbons to lower molecular weight hydrocarbons and contaminant metal components to components capable of being deposited on the catalyst. Hydrocracking is typically employed in the conversion of higher molecular weight hydrocarbons to lower molecular weight hydrocarbons to convert portions of a feedstock to lighter middle distillate products, such as gasoline and diesel oils.

Refiners of hydrocarbon oils are continually challenged to convert a greater portion of the oil into lighter middle distillate products. A number of conventional conversion processes are commonly used to tackle the conversion problem. Such processes include fluid catalytic cracking, "high pressure" hydrocracking and coking, which all require high capital investments in the refineries, and their construction may take years to be accomplished. ("High pressure" hydrocracking, as defined herein, refers to hydrocracking hydrocarbon oils at a hydrogen partial pressure above about 103 bar (1,500 p.s.i.g.) and requires the conversion of greater than 50 volume percent of the oil fraction boiling above $370^{\circ}$ C ($700^{\circ}$ F) to liquid products boiling at or below $370^{\circ}$ C ($700^{\circ}$ F). Preferred "high pressure" hydrocracking requires greater than a 55 volume percent conversion.) Because of high costs, refiners are continually searching for conversion processes which may be utilized in existing refinery units. One such alternative process for increasing a refinery's capacity to convert feedstocks to middle distillate products is "mild hydrocracking" in existing refinery units ordinarily designed to employ hydrogen partial pressures less than 103 bar (1,500 p.s.i.g.). Such a process involves severely hydroprocessing a feedstock to obtain increased percentages of middle distillate products while operating within the constraints of the existing refinery equipment. One of the challenges to the refiner is to discover a catalyst which will suitably perform within the design limits of the existing hydroprocessing unit. For example, a mild hydrocracking catalyst utilized in a unit formerly used for vacuum gas oil desulfurization or residuum hydrodesulfurization (i.e. a unit formerly used for less than about 10 volume percent hydrocarbon conversion) must exhibit acceptable activity, selectivity and stability, under the limiting operating conditions of the existing unit.

Therefore, an aim of the art is to provide a hydroprocessing catalyst, and more particularly, a mild hydrocracking catalyst having a high activity, selectivity and stability. Activity with respect to mild hydrocracking, may be determined by comparing the temperature at which various catalyst must be utilized under otherwise constant mild hydrocracking conditions with the same feedstock so as to produce a given percentage (between 10 volume percent and 50 volume percent) of products boiling at or below $370^{\circ}$ C ($700^{\circ}$ F). The lower activity temperature for a given catalyst, the more active such a catalyst is in relation to a catalyst of higher activity temperature. Alternatively, activity may be determined by comparing the percentages of products boiling at or below $370^{\circ}$ C ($700^{\circ}$ F), when various catalysts are utilized under otherwise constant mild hydrocracking conditions with the same feedstock. The higher the percentage of $370^{\circ}$ C- ($700^{\circ}$ F.-) minus product converted from the components in the feedstock boiling above $370^{\circ}$ C ($700^{\circ}$ F) for a given catalyst, the more active such a catalyst is in relation to a catalyst yielding a lower percentage of $370^{\circ}$ C- ($700^{\circ}$ F.-) minus product. Selectivity of a mild hydrocracking catalyst may be determined during the foregoing described activity test and is measured as that percentage fraction of the $370^{\circ}$ C- ($700^{\circ}$ F.-) product boiling in the range of middle distillate or midbarrel products, i.e., 150-$370^{\circ}$ C ($300^{\circ}$ F. - $700^{\circ}$ F). Stability is a measure of how well a catalyst maintains its activity over an extended period when treating a given hydrocarbon feedstock under the conditions of the activity test. Stability is generally measured in terms of the change in temperature required per day to maintain a 40 volume percent or other given conversion (less than 50 volume percent).

A typical hydroprocessing or mild hydrocracking catalyst contains hydrogenation metals on a porous refractory oxide support. Hydrogenation metals usually include Group VIB and/or Group VIII active metal components supported on an amorphous refractory oxide support such as alumina. Despite the high activity of the catalysts of the prior art, catalysts of yet higher activity, selectivity, and stability are still being sought.

Accordingly, it is a major object of this invention to provide an active hydroprocessing catalyst, and more particularly, an active mild hydrocracking catalyst. Another object is to provide for the hydroprocessing of a hydrocarbon oil utilizing such a catalyst. Another object still is to provide a mild hydrocracking process utilizing such a mild hydrocracking catalyst in existing refinery units to convert about 10 to about 50 volume percent of a hydrocarbon oil boiling above 370° C (700° C F) to middle distillate oils boiling at or below 370° C (700° F).

Still another object of the invention is to provide a process for removing organonitrogen and/or organosulfur compounds from a residuum hydrocarbon oil or vacuum gas oil by contacting the oil with a catalyst having a support containing silica-alumina dispersed in an alumina matrix and simultaneously converting about 10 to about 50 volume percent of the oil boiling above 370° C (700° F.) to middle distillate oils boiling at or below 370° C (700° F).

These and other objects and advantages of the invention will become apparent from the following description.

## SUMMARY OF THE INVENTION

In U.S. Patent No. 4,097,365, a hydrocracking catalyst is taught as containing a molybdenum and/or tungsten component and a nickel and/or cobalt component on a support comprising a silica-alumina cogel or copolymer dispersed in finely divided form into an alumina matrix. This patent teaches that the "combination of tungsten and nickel is preferred, having been found to give higher activity at a given level of selectivity than does the molybdenum-nickel combination."

The present invention is founded on the surprising discovery that, for mild hydrocracking purposes, the very opposite is the case. That is to say, it has now been discovered that, in the specific instance of mild hydrocracking, the molybdenum-nickel combination has substantially greater activity at a given level of selectivity than the tungsten-nickel combination. Therefore, the present invention resides in a catalyst and a mild hydrocracking process employing such a catalyst comprising a nickel component and a molybdenum component on a refractory oxide support comprising silica-alumina dispersed in a matrix of alumina. Surprisingly, it has been found that when the catalyst of the present invention also contains about one to about eight weight percent of phosphorus components that such a catalyst is more active for mild hydrocracking, desulfurization and denitrogenation than the same catalyst without phosphorus components. Employing such a catalyst, the mild hydrocracking process of the present invention yields about a 10 to about a 50 volume percent conversion of the hydrocarbon oil portion boiling above 370° C (700° F) to liquid products boiling at or below 370° C (700° F).

In one embodiment, the present invention provides a mild hydrocracking process promoted with a catalyst comprising a molybdenum first component plus a nickel second component plus a phosphorus third component supported on a heterogeneous support containing about 5 to about 98 weight percent of a finely divided cracking component dispersed in an alumina matrix wherein the cracking component is a silica-alumina cogel or copolymer containing about 20 to about 96, and preferably about 40 to about 90 weight percent $SiO_2$. The mild hydrocracking conditions of the process are such as to yield about a 10 to about a 50 volume percent conversion of the hydrocarbon oil fraction boiling above 370° C (700° F) to liquid products boiling at or below 370° C (700° F).

## DETAILED DESCRIPTION OF THE INVENTION

The invention is directed to a process for hydroprocessing a hydrocarbon oil, particularly a mild hydrocracking process promoted by a catalyst comprising a molybdenum first component plus a nickel second component supported on a heterogeneous support containing about 5 to about 98 weight percent of a finely divided cracking component dispersed in an alumina matrix. In one embodiment it is preferred that the support contain about 20 to about 98 weight percent of the cracking component, and in another embodiment it is preferred that the support contain about 5 to about 75 weight percent of cracking component. It is highly preferred that the catalyst also contain a phosphorus third component. The cracking component contains a silica-alumina cogel or copolymer containing about 35 to 96, and preferably about 50

3

to about 96 weight percent $SiO_2$. The process of the invention is particularly well suited for mild hydrocracking wherein a desired result is hydrocracking coupled with a suitable degree of hydrodenitrogenation and/or hydrodesulfurization of a hydrocarbon oil containing a relatively high content of nitrogen and sulfur.

Among the useful catalyst support materials for use in the present invention are those disclosed in U.S. Patent 4,097,365, herein incorporated by reference in its entirety. However, in contrast to the teaching of the preferred combination of tungsten and nickel in U.S. Patent No. 4,097,365, the catalyst employed in the present invention contains the combination of molybdenum and nickel metal components supported on the heterogeneous support material. In comparison to the nickel-tungsten catalyst, the nickel-molybdenum catalyst utilized in the mild hydrocracking process of the invention has been found to yield a higher activity (as measured by volume percent conversion) at three different temperatures, i.e., 377°C (710°F.), 391°C (735°F.), and 402°C (755°F.).

The heterogeneous alumina-silica catalyst supports utilized herein are amorphous and non-zeolitic. Such supports are composed of an alumina gel matrix (preferably a large pore alumina), in which a finely divided, intimately composited silica-alumina component is dispersed. Usually, the dispersion comprises at least 5 percent by weight of the support, with the preferred and most preferred proportions being in the respective ranges of 20 to 98 percent and 35 to 95 percent by weight of the support. Typically, these supports are non-crystalline, amorphous supports prepared by comulling an alumina hydrogel with a homogeneous silica-alumina cogel in hydrous or dry form, or with a "graft copolymer" of silica and alumina, then extruding the homogenized mixture to provide extrudates of the heterogeneous support of about 0.79 mm to about 3.2 mm (about 1/32 to about 1/8 inch) cross-sectional diameter. Alternatively, to provide a more highly porous structure, the homogeneous mixture may first be spray dried, then remulled with added water and extruded. Silica-alumina cogel components are prepared by conventional coprecipitation methods, e.g., as described in U.S. Patent No. 3,210,294. Silica-alumina graft copolymers are prepared in a known manner by impregnating silica hydrogel with an alumina salt followed by precipitation of alumina gel with ammonium hydroxide in the pores of the silica hydrogel. The composition and principle physical characteristics of the dried and calcined supports fall within the approximate ranges:

TABLE I

|  | Broad Range | Preferred Range |
| --- | --- | --- |
| Wt.% Cogel or Copolymer | 5-98 | 20-98 |
| Wt.% $SiO_2$ in Cogel or Copolymer | 20-96 | 50-96 |
| Overall $SiO_2$ Content of Support, Wt.% | 5-80 | 35-80 |
| Pore Volume, ml/g | 0.5-2.0 | 0.8-2.0 |
| Surface Area, $m^2$/g | 150-700 | 300-600 |
| Av. Pore Diameter, Ang. Percent of Pore Volume in Pores of Diameter Greater Than: | 50-150 | 70-130 |
| 100 Ang. | 10-80 | 25-70 |
| 500 Ang. | 5-60 | 20-50 |

While specific supports falling within the above composition ranges give catalysts differing considerably in activity, they share the common characteristic of contributing a higher activity at a given selectivity than would be obtained by using a homogeneous cogel or copolymer of the same overall $SiO_2/Al_2O_3$ ratio. Furthermore, the cross-sectional shapes of the extruded, dried and calcined supports disclosed herein are preferably trilobal or tetralobal. Examples of such shaped supports are disclosed in U.S. Patent No. 4,610,973, which is incorporated by reference herein.

In order to provide suitable catalytic activity, the heterogeneous support is composited with hydrogenation metals including a minor proportion of a molybdenum component and a minor proportion of a nickel component. Suitable proportions of molybdenum range between about 5 and about 35, preferably about 10 and about 30 weight percent, calculated as $MoO_3$. Suitable proportions of the nickel component range between about 2 and about 15, preferably about 3 and about 10 weight percent, calculated as NiO. In addition to nickel and molybdenum components, it is highly preferred that suitable proportions of phosphorus be composited with the heterogeneous support. Suitable proportions of phosphorus range between about 0.5 and about 10, preferably about 1 and about 8 weight percent, calculated as P.

The active hydrogenation metals may be added to the support by any of the well known conventional methods providing a homogeneous and intimate dispersion thereof in the support. One or both of the active hydrogenation metal components may be incorporated into the wet support mixture during the mulling stage prior to extrusion. However, the metals are preferably added by impregnation with the aqueous salt solutions thereof, after drying and calcining of the support particles. Impregnation may be accomplished using a single mixed impregnation solution or the metals may be added singly in sequential impregnations with intervening drying and/or calcining. Preferred nickel compounds for impregnation or comulling comprise the nitrates, acetates, formates, oxides, carbonates, and the like, and preferred molybdenum compounds include molybdenum oxide, ammonium molybdate, ammonium dimolybdate, or ammonium heptamolybdate. Preferred phosphorus compounds for impregnation or comulling comprise an acid of phosphorus, such as meta-phosphoric acid, pyrophosphoric acid, phosphorous acid, but preferably orthophosphoric acid, or a precursor, that is, a phosphorus-containing compound capable of forming a compound containing at least one acidic hydrogen atom when in the presence of water, such as phosphorus oxide, phosphorus, or the like. Following impregnation, the catalyst is dried and calcined in a conventional manner at elevated temperatures such as about 370°C (700° F.) to about 650°C (1200° F). The catalyst is preferably sulfided prior to use, using, for example, mixtures of hydrogen and hydrogen sulfide.

The catalyst may be employed as either a fixed, slurried or fluidized bed (but most usually a fixed bed) of particulates in a suitable reactor vessel wherein a hydrocarbon oil to be treated is introduced and subjected to hydroprocessing conditions including an elevated total pressure, temperature, and hydrogen partial pressure, so as to effect the desired degree of hydroprocessing, as for example, desulfurization, denitrogenation, demetallization, conversion of asphaltenes, hydrocracking, mild hydrocracking and the like.

Typical hydroprocessing operating conditions are shown in the following Table II.

TABLE II

| Operating Conditions | Suitable Range | Preferred Range |
|---|---|---|
| Temperature, °C (°F) | 260-480 (500-900) | 315-455 (600-850) |
| Hydrogen Pressure bar (p.s.i.g.) | 3.5-241 (200-3500) | 34.5-172 (500-2500) |
| Space Velocity, LHSV | 0.05-3.0 | 0.1-2.0 |
| Hydrogen Recycle m³/m³ Rate (scf/bbl) | 89-2672 (500-1500) | 178-1781 (1000-10000) |

Ordinarily, for such processes as desulfurization, denitrogenation and demetallization, the above hydroprocessing conditions may be adjusted within the disclosed ranges to yield less than about a 10 volume percent conversion of the oil fraction boiling above 370°C (700°F) to liquid products boiling at or below 370°C (700°F). However, when employing the catalyst of the invention for high pressure hydrocracking, such conditions can be adjusted within the disclosed ranges to yield greater than 50 volume percent conversion of 370°C (700°F) plus feed to liquid products boiling at or below 370°C (700°F).

Under preferred conditions for mild hydrocracking wherein between 10 and 50 volume percent of the oil fraction boiling above 370°C (700°F), is converted to liquid products boiling at or below 370°C (700°F), the hydrocarbon oil and catalyst are subjected to a hydrogen partial pressure usually less than 172 bar (2,500 p.s.i.g.) often in the range from about34.5 to about 89.5 bar (about 500 to about 1,300 p.s.i.g.), (frequently less than 82.4 bar (1,200 p.s.i.g.) for vacuum gas oil mild hydrocracking) at a space velocity usually in the range from 0.05 to about 3.0 LHSV and often less than 1.0 LHSV, so as to effect the desired degree of hydrocracking, desulfurization, and denitrogenation. As used herein, mild hydrocracking conditions require the conversion of about 10 to about 50 and preferably 15 to about 35 volume percent of the feedstock hydrocarbons boiling above about 370°C (700°F) to products boiling at or below 370°C (700°F) from a single pass of a feedstock in contact with the catalyst. As shown hereinafter in the examples, mild hydrocracking is often accompanied by the simultaneous desulfurization and denitrogenation of a hydrocarbon oil. The selectivity of the catalyst of the invention has been exhibited to convert at least 85 volume percent 370°C (700°F-) minus product, to a fraction which boils in the range from about 150°C (300°F) to about 370°C (700°F).

Contemplated for treatment by the process of the invention are hydrocarbon-containing oils herein referred to generally as "hydrocarbon oils", including broadly all liquid and liquid/vapor hydrocarbon mixtures such as crude petroleum oils and synthetic crudes. Among the typical oils contemplated are top crudes, vacuum and atmospheric residual fractions, light and heavy atmospheric and vacuum distillate oils, shale oils, and oils from bituminous sands and coal compositions and the like. For use herein, typical hydrocarbon oils or mixtures thereof contain at least about 50 volume percent of components boiling above about 370°C (700°F) and/or a pour point usually greater than about 4°C (40°F).

Although virtually any hydrocarbon feedstock containing undesirable proportions of sulfur and nitrogen

5

may be treated by mild hydrocracking, the process is particularly suited to treating (1) gas oils, preferably light and heavy vacuum gas oils and waxy shale oils, and (2) heavy residual fractions, especially the treated atmospheric and vacuum residual oils containing less than about 25 ppmw of contaminant metals (vanadium, nickel, and the like). Sulfur is usually present in such oils in a proportion exceeding 0.1 weight percent and often exceeding 1 weight percent. Frequently, the feedstock contains undesirable proportions of nitrogen, usually in a concentration greater than about 0.01 weight percent and often between about 0.1 and 1.0 weight percent. The feedstock may contain waxy components, e.g., n-paraffins and isoparaffins, in amounts to exhibit pour points of at least about -1°C (30°F).

A hydroprocessing reactor useful for employing the catalyst in the mild hydrocracking process of the invention is ordinarily an existing reactor that is part of an existing hydroprocessing unit, or units, in a refinery. A preferred reactor is one formerly used for vacuum gas oil desulfurization. In the mild hydrocracking of such a gas oil, the catalyst is usually maintained as a fixed bed with the feedstock passing downwardly once therethrough, and the reactor is generally operated under conditions within the limits of the existing reactor design. In some instances, one or more additional mild hydrocracking reactors may be added to the existing equipment, either in series or parallel.

Another preferred reactor utilized in the process of the invention is one formerly used for hydrodesulfurizing a hydrocarbon residuum feedstock. Ordinarily, this reactor is in the latter stage, or stages, of a multi-stage unit for hydrodesulfurization and/or demetallization of a residuum-containing feedstock. In the case of mild hydrocracking of a residuum feedstock, the total hydrogen pressure is usually higher than that during mild hydrocracking of a gas oil. In comparison to conventional hydrodesulfurization conditions that yield, from a single pass, less than about 10 volume percent of liquid hydrocarbon products boiling at or below 370°C (700°F), the operating conditions of the process of the invention for mild hydrocracking a residuum hydrocarbon typically include an increased temperature and/or decreased space velocity.

The results obtained in the mild hydrocracking process of the invention depend upon the nature of the feedstock and the severity of the operating conditions. It is preferred that about 15 to about 30 volume percent of the hydrocarbon oil can be converted, in a single pass, to liquid products boiling at or below 370°C (700°F), and at least about 85 volume percent of the 370°C- (700°F-) minus fraction contain liquid hydrocarbon products boiling in the midbarrel range from about 150°C (300°F) to about 370°C (700°F). In the case of hydro-dewaxing, the pour point of the product is usually reduced to less than -1°C (30°F), and preferably less than -4°C (25°F).

The invention is further illustrated by the following examples which are illustrative of specific modes of practicing the invention and are not intended as limiting the scope of the invention defined by the appended claims.

## EXAMPLE I

A catalyst, designated as Catalyst A, is prepared in accordance with the invention.

Catalyst A is prepared as follows: A support containing overall 48 weight percent of silica and 52 weight percent of alumina is prepared by mulling about 55 parts by dry weight of an approximately 75/25 silica-alumina graft copolymer ($Al_2O_3$ precipitated via aluminum sulfate into the pores of a preformed silica gel) with 45 parts by weight of hydrous alumina gel, followed by spray drying. The spray dried composite is then remulled with water and extruded through a die producing 1.6mm (1/16 inch) cross-sectioned clover-leaf extruded matter, which, after being broken into extrudates of about 2.5 and 15mm (0.1 and 0.6 inch) lengths, is oven dried at 110°C for 2 hours and calcined at 650°C (1,200°F) for 2 hours.

The silica-alumina/alumina support particles are impregnated with a solution containing ammonium heptamolybdate, nickel nitrate, and phosphoric acid. After impregnation, the catalyst is dried at 110°C and calcined at 482°C (900°F) in flowing air. A final catalyst is produced having a nominal composition as follows: 24.0 weight percent of molybdenum components, calculated as $MoO_3$, 4.0 weight percent of nickel components, calculated as NiO, 5.0 weight percent of phosphorus components, calculated as P, with the balance comprising the silica-alumina/alumina support.

Catalyst A is tested under mild hydrocracking conditions to determine its hydrocracking activity and selectivity and its denitrogenation and desulfurization activity against two comparison catalysts in comparative processes.

Catalyst B is prepared in a similar manner as Catalyst A, except the support particles are impregnated with an impregnating solution containing ammonium metatungstate and nickel nitrate. Catalyst B has a nominal composition of 22.0 weight percent of tungsten components, calculated as $WO_3$, 4.0 weight percent of nickel components, calculated as NiO and the same physical characteristics (including silica-alumina/alumina weight ratio) as Catalyst A.

Catalyst C is a commercially available catalyst useful for mild hydrocracking and contains about 20.0 weight percent of molybdenum components, calculated as $MoO_3$, about 5.0 weight percent of cobalt components, calculated as CoO, about 3.0 weight percent of phosphorus components, calculated as P, and the balance of gamma alumina. Catalyst A and the two comparison catalysts are each presulfided for about 16 to about 20 hours by contact with a gas consisting of 90 volume percent $H_2$ and 10 volume percent $H_2S$ flowing at 0.125 SCMH (4.4 SCFH) (one atmosphere pressure). The temperature during the presulfiding is initially room temperature, is increased gradually until 370°C (700°F) is reached, and then lowered to 288°C (500°F), at which time the catalyst is contacted with the feedstock.

Catalyst A and comparison Catalysts B and C are tested at mild hydrocracking conditions to determine activity and selectivity with a Light Arabian vacuum gas oil (VGO) feedstock having the characteristics shown in Table III below. Table III also includes hydrodenitrogenation and hydrodesulfurization activity. The presulfided catalysts, A and the comparisons, are each charged in separate runs to a reactor and utilized at 377°C (710°F) for 3 days, at 391°C (735°F) for 2 days, and at 402°C (755°F) for the next 2 days to hydrocrack, hydrodesulfurize and hydrodenitrogenate the VGO feedstock under the following conditions: 69 bar (1,000 p.s.i.g.) total pressure, 1.0 LHSV and a hydrogen rate of 534m³/m³ (3,000 SCF/B).

TABLE III

| Feedstock Properties | |
|---|---|
| Feed Description | Light Arabian Vacuum Gas oil |
| Gravity, °API | 22.3 |
| Sulfur, wt.% | 2.54 |
| Nitrogen, wt.% | 0.09 |
| Carbon Residue, D-189, wt.% | 0.42 |
| Pour Point, °C (°F) | +35 (+95) |
| ASTM D-1160, Vol% | Distillation, °C (°F) |
| IBP/b | 328/371 (623/700) |
| 10/20 | 392/413 (737/776) |
| 30/40 | 432/447 (810/837) |
| 50/60 | 460/481 (860/898) |
| 70/80 | 498/520 (928/968) |
| 90/95 | 548/567 (1019/1056) |
| EP | 595 (1103) |

A portion of the feedstock is passed downwardly through each reactor and contacted with the described catalysts in a single-stage, single pass system with once-through hydrogen. The data relating to conversion of nitrogen and sulfur compounds and conversion to 370°C (700°F) minus products is summarized in Table IV.

TABLE IV

| Catalyst | Product Vol% Boiling at or Below 370°C(700°F) | | | Wt.% Product S | | | Wt.% Product N | | |
|---|---|---|---|---|---|---|---|---|---|
| Temp, °C (°F) | 377 (710) | 391 (735) | 402 (755) | 377 (710) | 391 (735) | 402 (755) | 377 (710) | 391 (735) | 402 (755) |
| A | 22.3 | 33.9 | 45.2 | 0.734 | 0.165 | 0.059 | 0.047 | 0.016 | 0.007 |
| B | 19.0 | 25.3 | 33.5 | 0.210 | 0.054 | 0.015 | 0.025 | 0.012 | - |
| C | 18.9 | 22.6 | 29.6 | 0.040 | 0.024 | 0.015 | - | 0.023 | 0.011 |

In view of the data in Table IV relative to conversion of the feedstock to products boiling at a temperature at or below 370°C (700°F), the process of the invention utilizing Catalyst A exhibits noticeably higher yields of products boiling below 370°C (700°F) than the comparison catalysts at all three conversion temperatures. Furthermore, the process utilizing Catalyst A selectively produces essentially equivalent volume percentages of products boiling between about 150°C (300°F) and about 370°C (700°F) compared to a process devoid of a catalyst containing nickel and molybdenum components.

## EXAMPLE II

Catalyst A of Example I is tested under mild hydrocracking conditions for 50 days to determine stability with the feedstock of Example I.

The presulfided catalyst is charged to a reactor and utilized under the following conditions: 76 bar (1,100 p.s.i.g.) total pressure, a space velocity of 0.89 LHSV, a hydrogen gas (90 percent purity) rate of 935 $m^3 m^3$ (5,250 SCF/B) and a temperature sufficient to maintain coversion of 20 volume percent of the feedstock fraction boiling above 370°C (700°F) to 370°C-(700°F-) minus product.

During the period from day 30 through the end of the run (day 50) the average temperature increase requirement (TIR) is 0.17°C (0.3°F.) per day to maintain the 20 volume percent conversion. Such a TIR demonstrates good stability (i.e., resistance to deactivation) for the catalyst in the process of the invention.

## EXAMPLE III

A catalyst, designated as Catalyst U, is prepared according to the method described in the preparation of Catalyst A in Example I except the final catalyst has a nominal composition comprising about 12 weight percent of molybdenum components, calculated as $MoO_3$, about 3.5 weight percent of nickel components, calculated as NiO, and about 4.5 weight percent of phosphorus components, calculated as $P_2O_5$.

Another catalyst, designated as Catalyst X, is prepared according to the method described in the preparation of Catalyst U except no phosphoric acid is utilized and Catalyst X comprises about 12 weight percent of molybdenum components, calculated as $MoO_3$, about 3.5 weight percent of nickel components, calculated as NiO, and essentially no phosphorus components.

Catalysts U and X are tested at mild hydrocracking conditions to determine activity for mild hydrocracking, desulfurization and denitrogenation with a Heavy Arabian vacuum gasoline (VGO) hydrocarbon feedstock, having the characteristics shown in Table V below. The presulfided Catalysts U and X are each charged in separate runs through a bed of catalyst, at the same presulfiding and operating conditions as in Example I, each run employing a different catalyst.

## TABLE V

| FEEDSTOCK PROPERTIES | |
|---|---|
| Feed Description | Heavy Arabian VGO |
| Gravity, °API | 21.4 |
| Sulfur, X-ray, Wt.% | 2.93 |
| Nitrogen, Wt.% | 0.096 |
| Pour Point, °C (°F) | +33 (+91) |
| Carbon Residue on 10% Botts, D-189, Wt.% | 0.08 |
| ASTM D-1160, Vol. % | Distillation, °C (°F) |
| IBP/5 | 257/356 (494/672) |
| 10/20 | 369/397 (697/746) |
| 30/40 | 417/433 (782/811) |
| 50/60 | 450/464 (842/868) |
| 70/80 | 481/497 (898/926) |
| 90/95 | 522/542 (972/1007) |
| EP/Rec., °C (°F)/Vol. % | 557 (1034)/98.0 |

Data relating to conversion of nitrogen and sulfur compounds and conversion of the feedstock to products boiling at or below 370°C (700°F) for Run Number 1 (employing Catalyst U) and Run Number 2 (employing Catalyst X) at a temperature of 391°C (737°F) for 5 days and at a temperature of 402°C (755°F) for 2 days are summarized in the following Table VI.

8

TABLE VI

| Run Number | Product Vol. % Boiling at or | | Product S, | | Product N, | |
| (Catalyst) | Below 370° C (700° F) | | ppmw | | ppmw | |
|---|---|---|---|---|---|---|
| Temp, °C | 391 | 402 | 391 | 402 | 391 | 402 |
| (°F) | (735) | (755) | (735) | (755) | (735) | (755) |
| 1. (U) | 35.8 | 46.1 | 193 | 36 | 17 | 6 |
| 2. (X) | 33.3 | 41.7 | 286 | 74 | 24 | 9 |

The data indicate that Catalyst U of the invention exhibits better activity for sulfur conversion, nitrogen conversion and conversion of the feedstock to products boiling at or below 370° C (700° F) than Catalyst X containing no phosphorus components.

The features disclosed in the foregoing description and in the following claims may, both separately and in any combination thereof, be material for realising the invention in diverse forms thereof.

**Claims**

1. A catalytic composition consisting essentially of at least one nickel metal component, at least one molybdenum metal component and at least one phosphorus component supported on a heterogenous support consisting essentially of about 5 to about 98 weight percent of a finely divided cracking component dispersed in an alumina matrix, said cracking component being a silica-alumina cogel or copolymer containing about 20 to about 96 weight percent $SiO_2$.

2. A composition according to claim 1, wherein said heterogenous support is amorphous and non-zeolitic.

3. A composition according to claim 1 or 2, wherein said cracking component contains about 50 to about 96 weight percent $SiO_2$.

4. A composition according to claim 1, 2 or 3, wherein said copolymer contains about 40 to about 90 weight percent $SiO_2$.

5. A composition according to any one of claims 1 to 4, wherein the overall $SiO_2$ content of said heterogenous support is in the range from about 35 to about 80 percent by weight.

6. A composition according to any preceding claim, wherein said heterogenous support consists essentially of about 5 to about 75 weight percent of said cracking component.

7. A composition according to any preceding claim, wherein said heterogenous support is prepared by:
   (a) preparing a homogenous cogel or copolymer containing silica and alumina,
   (b) mixing an alumina gel or alumina hydrogel with said homogenous cogel or copolymer, and
   (c) forming particulates from the mixture obtained in step (b) and drying said particulates.

8. A composition according to any preceding claim, consisting essentially of about 5 to about 35 weight percent of molybdenum components, calculated as $MoO_3$, about 2 to about 15 weight percent of nickel components, calculated as NiO, and about 1 to about 8 weight percent of phosphorus components, calculated as P.

9. A particulate catalyst according to any preceding claim, containing at least about one to about eight weight percent of said phosphorus component, wherein said cracking component is a copolymer containing about 20 to about 96 weight percent $SiO_2$ dispersed in an alumina matrix.

10. A composition according to claim 9, wherein said copolymer contains about 50 to about 96 weight percent $SiO_2$.

11. A composition according to claim 9 or 10, wherein said heterogenous support is prepared by:
   (a) preparing a homogenous copolymer containing silica and alumina,
   (b) mixing an alumina gel or alumina hydrogel with said homogenous copolymer, and
   (c) forming particulates from the mixture obtained in step (b) and drying said particulates.

12. A particulate catalyst comprising at least about 2 to about 15 weight percent of a nickel metal components, at least about 5 to about 35 weight percent of a molybdenum metal component and at least about one to about eight weight percent of a phosphorus component supported on a heterogenous support

9

consisting essentially of about 5 to about 98 weight percent of a finely divided amorphous cracking component dispersed in an alumina matrix, said cracking component being a cogel or copolymer containing about 40 to about 90 weight percent SiO₂.

13. A composition according to claim 12, wherein said heterogenous support is prepared by: (a) preparing a homogenous cogel or copoylmer containing silica and alumina,

(b) mixing an alumina gel or alumina hydrogel with said homogenous cogel or copolymer, and

(c) forming particulates from the mixture obtained in step (b) and drying said particulates.

14. A composition according to claim 12 or 13, wherein said cracking component is non-zeolitic.

15. A composition according to claim 12, 13 or 14, wherein the overall SiO₂ content of said heterogenous support is in the range from about 35 to about 80 percent by weight.

16. A composition according to any one of claims 12 to 15, wherein said heterogenous support consists essentially of about 5 to about 75 weight percent of said cracking component.

17. A process for hydroprocessing a hydrocarbon oil, said process comprising contacting said hydrocarbon oil under conditions of elevated temperature and pressure with a particulate catalyst composition in accordance with any one of claims 1 to 16.

18. A process for mild hydrocracking a hydrocarbon oil, said process comprising contacting said hydrocarbon oil under mild hydrocracking conditions of elevated temperature and pressure with a particulate catalyst consisting essentially of at least one nickel metal component, at least one molybdenum metal component and at least one to about eight weight percent of a phosphorus component supported on a heterogenous support consisting essentially of about 5 to about 75 weight percent of a finely divided cracking component dispersed in an alumina matrix, said cracking component being a copolymer containing about 20 to about 96 weight percent SiO₂, said mild hydrocracking conditions comprising a temperature and hydrogen pressure in the range between about 13.5 bar (200 p.s.i.g.) and about 103 bar (1,500 p.s.i.g.) yielding about 10 to about 50 volume percent conversion of the hydrocarbon oil fraction boiling above 370°C (700°F) to hydrocarbon products boiling at or below 370°C (700°F).

19. A process according to claim 18, wherein said hydrocarbon oil contains more than 50 volume percent of hydrocarbon components boiling above 370°C (700°F).

20. A process according to claim 18 or 19, wherein said hydrocarbon oil is a residuum feedstock.

21. A process according to claim 18 or 19, wherein said hydrocarbon oil is a vacuum gas oil.

22. A process according to any one of claims 18 to 21, wherein said copolymer contains about 50 to about 90 weight percent SiO₂.

23. A process according to any one of claims 18 to 22, wherein said hydrocracking conditions comprise a hydrogen pressure in the range between about 34.5 bar (500 p.s.i.g.) and about 89.5 bar (1,300 p.s.i.g.).

24. A process for mild hydrocracking a hydrocarbon oil containing more than 50 volume percent of hydrocarbon components boiling at greater than 370°C (700°F), said process comprising contacting said hydrocarbon oil under mild hydrocracking conditions including a temperature greater than about 315°C (600°F), a hydrogen pressure from about 13.5 bar (200 p.s.i.g.) to about 103 bar (1,500 p.s.i.g.) and a space velocity less than about 1.5 LHSV with a catalytic composition consisting essentially of at least one nickel metal component, at least one molybdenum metal component and at least about one to about eight weight percent of a phosphorous component supported on a heterogenous support consisting essentially of about 20 to about 65 weight percent of a finely divided cracking component dispersed in an alumina matrix, said cracking component being a copolymer containing about 50 to about 96 weight percent SiO₂, and said mild hydrocracking conditions yielding about 15 to about 35 volume percent conversion of said hydrocarbon oil boiling above 370°C (700°F) to hydrocarbon products boiling at or below 370°C (700°F).

25. A process according to claim 24, wherein said catalytic composition consists essentially of about 5 to about 35 weight percent of molybdenum components, calculated as MoO₃, and about 2 to about 15 weight percent of nickel components, calculated as NiO.

26. A process according to claim 24 or 25, wherein said hydrocarbon oil is a residuum feedstock or a vacuum gas oil.

27. A process according to claim 24, 25 or 26, wherein said hydrocarbon products contain at least 85 volume percent of liquid hydrocarbon products boiling in the range from about 150°C (300°F) to about 370°C (700°F).

28. A process according to any one of claims 18 to 27, wherein said hydrocarbon oil contains sulfur and said process further comprises the simultaneous removal of said sulfur under said mild hydrocracking conditions.

29. A process according to any one of claims 18 to 28, wherein said hydrocarbon oil contains nitrogen and said process further comprises the simultaneous removal of said nitrogen under said mild hydrocracking conditions.

11